# EUROPÄISCHE PATENTSCHRIFT

(11) **EP 1 600 354 B1**
(45) Veröffentlichungstag und Bekanntmachung des Hinweises auf die Patenterteilung: **02.04.2008**
(21) Anmeldenummer: 05090149.5
(22) Anmeldetag: 24.05.2005
(51) Int. Cl.: B62D 1/06

(54) **Beheizbares Furnierelement für Kfz-Lenkräder und Verfahren zur Herstellung eines solchen Furnierelementes**
Heatable veneer element for motor vehicle steering wheels and a method for manufacturing such a veneer element
Elément de placage chauffant pour volants de véhicules automobiles et procédé de fabrication d'un tel élément de placage

(30) Priorität: 28.05.2004 DE 102004027008
(43) Veröffentlichungstag der Anmeldung: 30.11.2005
(73) Patentinhaber: Takata-Petri AG, 63743 Aschaffenburg (DE)
(72) Erfinder: Haart, Christian, 63785 Obernburg (DE); Maul, Holger, 64846 Gross-Zimmern (DE); Sauer, Martin, 63768 Hösbach (DE)
(74) Vertreter: Reininger, Jan Christian

(56) Entgegenhaltungen:
- EP-A- 1 522 483
- WO-A-00/29271
- DE-A1- 10 027 046
- US-B1- 6 707 006
- US-B1- 6 727 467

## Beschreibung

Die Erfindung betrifft ein beheizbares Furnierelement für Kfz-Lenkräder gemäß dem Oberbegriff des Anspruchs 1. Ferner betrifft die Erfindung ein Verfahren zur Herstellung eines solchen Furnierelementes, wie bekannt aus US 6,707, 006 B1.

Derartige beheizbare Furnierelemente dienen insbesondere zum abschnittsweisen Umschließen eines Kfz-Lenkradkranzes. Diese Furnierelemente weisen ein Deckfurnierstück mit mindestens einer Schicht aus Holz und/oder Holzimitat und ein untrennbar mit dem Deckfurnierstück verbundenes Heizelement zur Beheizung des Deckfurnierstückes auf. Nach dem Verfahrensschritt zur Herstellung der untrennbaren Verbindung wird das Furnierelement mit einem Kunststoff hinterspritzt und dadurch ein Trägerstück ausgebildet. Auf diese Weise lassen sich besonders kostengünstige Furnierelemente herstellen.

An jedes beheizbare Kfz-Lenkrad wird üblicherweise die Anforderung gestellt, dass der Lenkradkranz zumindest abschnittsweise schnell, d.h. in weniger als drei Minuten, auf eine haptisch angenehme Temperatur gebracht werden kann. Dieser Anforderung steht bei einem Holzlenkrad die vergleichsweise schlechte Wärmeleitung des Holzes entgegen.

Wegen dieses grundsätzlichen Problems wird in der EP 1 026 066 A2 vorgeschlagen, zwischen Deckfurnierstück und Heizelement eine wärmeleitende Tragschicht aus Kunststoff vorzusehen. Die in dieser Patentanmeldung vorgeschlagene Tragschicht soll zum einen eine ausreichende Haftfestigkeit zur außen aufgebrachten Deckfurnierschicht bereitstellten; zum anderen soll bei ausreichender mechanischer Festigkeit des gesamten Furnierelementes aufgrund der guten Wärmeleitfähigkeit der eingesetzten Tragschicht die gewünschte kurze Aufheizzeit der Lenkradkranzoberfläche realisiert werden.

Diese vorgeschlagene Lösung hat jedoch den Nachteil, dass zusätzlich zu den üblicherweise vorhandenen Deck- und Blindfurnierschichten ein weiteres, neues Material zur Steigerung der Aufheizgeschwindigkeit vorzusehen ist. Dadurch erhöht sich der Fertigungsaufwand und somit zwangsläufig auch der Herstellungspreis eines derartigen Furnierelements.

Aus der US 6,707,006 B1 ist ein Verfahren zum Herstellen eines beheizbaren Lenkrads bekannt, bei dem ein Kunststofffilm mit einem elektrisch leitfähigen Muster bedruckt wird. Der Kunststofffilm wird mittels Vakuumverformen in eine gewünschte Form gebracht, mit einem Kunststoff zur Versteifung hinterspritzt und am Lenkrad befestigt.

Die US 6,727,467 B1 beschreibt ein beheizbares Lenkrad mit einem Skelett, einer äußeren Hülle und einem Heizelement, das zumindest teilweise zwischen dem Skelett und der Hülle angeordnet ist. Das Heizelement weist einen oder mehrere Leiter sowie ein Polster und ein Trennmittel zum Einbetten jener Leiter auf.

Der vorliegenden Erfindung liegt somit die Aufgabe zu Grunde, ein beheizbares Furnierelement für Kfz-Lenkräder bereitzustellen, dass die vorangehend genannten Schwierigkeiten überwindet und ein Verfahren bereitzustellen, so dass sich ein solches Furnierelement wirtschaftlich und mit technisch vertretbaren Mitteln herstellen lässt.

Diese Aufgabe wird durch ein Furnierelement mit den Merkmalen des Anspruchs 1 und durch ein Herstellungsverfahren gemäß Anspruch 16 gelöst.

Erfindungsgemäß ist vorgesehen, dass das Deckfurnierstück mittels auf einer Seite des Deckfurnierstückes und/oder auf einer Seite des Heizelements vorgesehen Klebemitteln unmittelbar und untrennbar mit dem Heizelement verbunden ist, wobei das Deckfurnierstück auf seiner vom Heizelement abgewandten Seite mit einer Decklackschicht versehen wird.

Das Merkmal der "untrennbaren" Verbindung zweier Elemente wird in dieser Anmeldung derart verstanden, dass sich die beiden Elemente nicht zerstörungsfrei voneinander trennen lassen. Eine derartig untrennbare Verbindung wird üblicherweise beim Vorgang des Laminierens dünner Schichten geschaffen.

Das Merkmal der "unmittelbaren" Verbindung zweier Elemente wird in dieser Anmeldung so verstanden, dass sich zwischen den beiden Elementen kein weiteres drittes befindet. Für den erfindungsgemäßen Aufbau des Furnierelements heißt dies, dass zwischen dem die Heizwärme generierenden Heizelement und der mindestens einen Schicht aus Holz oder Holzimitat des Deckfurnierelements keine weitere Schicht vorhanden ist, die von der generierten Wärme auf dem Weg zur LenkradkranzOberfläche durchdrungen werden muss. Das Merkmal "Holzimitat" wird hier so verstanden, dass darunter auch andere Materialien als Holz, insbesondere Kunststoff, fallen, deren äußere optische Anmutung in Form einer Holzmaserung erscheint.

Die vorangehend definierte unmittelbare Verbindung hat den Vorteil, dass der von der Heizwärme zurückzulegende Weg minimiert und somit eine kurze Aufheizzeit (< 3 min) des Lenkradkranzes realisiert werden kann. Der zurückzulegende Weg entspricht im wesentlichen der Stärke des Deckfurnierstücks, dessen eine oder mehrere Schichten jeweils sehr dünn, d.h. < 1 mm je Schicht, ausbildbar sind.

Außerdem ist diese gewünschte Wirkung erzielbar, ohne dass eine spezielle Wärmeleitungsschicht dafür notwendig wäre.

In einer bevorzugten Ausführungsform weist das Heizelement eine Heizschicht auf und ist auf seiner dem Deckfurnierstück abgewandten Seite untrennbar mit einem Trägerstück verbunden. Das Trägerstück dient dabei der mechanischen Stabilisierung und als Befestigungsmittel des dünnen Laminats, gebildet aus Deckfurnierstück und Heizelement, auf dem Lenkradkranz.

In einer weiteren Variante der Erfindung weist das Heizelement mindestens eine an das Trägerstück angrenzende untere Blindfurnierschicht auf. Auf diese Weise wird es insbesondere ermöglicht, dünne auf dem Blindfurnier vorbefestigte Heizschichten auf einfache Weise bei der Herstellung des Furnierelements verarbeiten zu können.

Weiterhin weist das Trägerstück bevorzugt ein aus Kunststoff und/oder Holz bestehendes Montagemittel zur Montage des Furnierelements auf einem Kfz-Lenkrad auf. Die Montagemittel dienen insbesondere zur Herstellung einer Klemm-, Schnapp-, Rast- oder Schweißverbindung von Furnierelement und Lenkradkranz.

Wenn die bevorzugten dünnen Deckfurnierstücke zum Einsatz kommen ist es besonders vorteilhaft, ein Heizelement mit einer dem Deckfurnierstück angepassten Farbgebung einzusetzen. Insbesondere bei der Verformung des Deckfurnierstückes ist es wahrscheinlich, dass in diesem Risse auftreten. Durch diese Risse hindurch wäre ein Heizelement in einer bezüglich des Deckfurnierstücks kontrastreichen Farbe auffällig sichtbar. Daher ermöglicht die angepasste Farbgebung von Heizelement und Furnierstück, dass der ästhetische Gesamteindruck des Furnierstücks auch bei der beschriebenen Rissbildung erhalten bleibt.

In einer bevorzugten Variante der Erfindung ist das Deckfurnierstück zweilagig aufgebaut. Es besteht auf seiner dem Heizelement abgewandten Seite aus einer Deckfurnierschicht und unmittelbar daran angrenzend aus einer mit der Deckfurnierschicht untrennbar verbundenen oberen Blindfurnierschicht. Der Einsatz eines geeigneten Blindfurniers ermöglicht dabei die Auflaminierung der ästhetisch anspruchsvollen Deckfurnierschicht unter idealen Haftungseigenschaften.

Wenn das Heizelement vergleichbar gute Haftungseigenschaften für die Deckfurnierschicht bietet, so wird das Deckfurnierstück bevorzugt aus einer einzigen dekorativen Deckfurnierschicht bestehen.

Die Deckfurnierschicht ist auf seiner nach außen gewandten Seite bevorzugt mit einer dünnen, d.h. < 1 mm starken, Decklackschicht versehen.

Die Heizschicht des Heizelementes lässt sich in vielfältiger Weise insbesondere als Heizgewirke, Heizgewebe, Heizfolie oder als Vlies, jeweils mit aufgedruckten oder eingelagerten elektrischen Heizleiterbahnen ausbilden. Ein solches Vlies kann aus Polyamid, Polyester, Polypropylen, Sisal, Zellulose oder aus Mischungen dieser Materialien gebildet sein.

In einer bevorzugten Ausführungsform verändert sich der Widerstand der elektrischen Leiterbahnen und/oder deren räumlicher Abstand zueinander abhängig von der Lage der Leiterbahnen auf der Heizschicht. Dadurch lassen sich definierte Bereiche mit unterschiedlich schnellem Aufheizzeiten realisieren.

Bevorzugt weist das Furnierelement einen schalenförmigen Aufbau derart auf, dass sich der Lenkradkranz eines Kfz-Lenkrades abschnittweise durch das Furnierelement umgreifen lässt. Dabei sind die Furnierelemente in Form von Furnierschalen ausgebildet, derart, dass der Lenkradkranz von mindestens zwei aneinander gesetzten Furnierschalen vollständig umschließbar ist. Dabei weist das Furnierelement mechanische Verbindungsmittel auf, die beim Zusammenfügen mehrerer Furnierelemente um einen Abschnitt des Lenkradkranzes derart zusammenwirken, dass die aneinander stoßenden Kanten der Furnierelemente einen möglichst glatten Übergang bilden. Derartige mechanische Verbindungsmittel lassen sich insbesondere als Nut- und Federelemente ausbilden, die entlang der aneinander stoßenden Kanten der Furnierelemente angeordnet sind.

Besonders vorteilhaft ist die Ausbildung der Furnierelemente in Form von Halbschalen, derart, dass zwei Furnierelemente den Lenkradkranz entlang dessen halben Querschnittsumfangs symmetrisch umgreifen.

Die vorliegende Erfindung betrifft auch ein Verfahren zur Herstellung eines Furnierelementes mit den folgenden Schritten. Zunächst wird ein zugeschnittenes Deckfurnierstück bestehend aus mindestens einer Schicht aus Holz- und/oder Holzimitat bereitgestellt. Danach werden Klebemittel auf einer Seite des bereitgestellten Deckfurnierstückes und/oder auf einer Seite des Heizelements vorgesehen. Anschließend wird das Heizelement auf das Deckfurnierstück aufgelegt und schließlich eine untrennbare Verbindung zwischen Deckfurnierstück und Heizelement hergestellt, wobei das Furnierelement nach dem Verfahrensschritt zur Herstellung der untrennbaren Verbindung mit einem Kunststoff hinterspritzt wird, und dadurch ein Trägerstück ausgebildet wird. Auf diese Weise lassen sich besonders kostengünstige Furnierelemente herstellen. Weiterhin wird das Deckfurnierstück in einem Lackierschritt auf seiner vom Heizelement abgewandten Seite mit einer Decklackschicht versehen.

Bei einer Variante des erfindungsgemäßen Verfahrens wird gleichzeitig mit dem Verfahrensschritt der Herstellung der untrennbaren Verbindung (Laminieren) ein Verformungsschritt zur Herstellung einer dauerhaften Verformung des Deckfurnierstücks und des Heizelements vorgenommen. Dabei wird das Furnierelement mit Hilfe bekannter Laminierpressen in die räumliche Form gebracht, in der das Furnierelement schließlich auf dem Kfz-Lenkradkranz montiert wird.

Eine zweite Variante des Herstellungsverfahrens sieht vor, dass sowohl das Deckfurnierstück als auch das Heizelement nach dem Verfahrensschritt des Vorsehens von Klebemitteln jeweils separat einem Verformungsschritt zur Herstellung einer dauerhaften Verformung unterzogen werden. Erst im Anschluss daran folgt dann der Verfahrensschritt der Herstellung einer untrennbaren Verbindung zwischen Deckfurnierstück und Heizelement.

Eine dritte Variante des Herstellungsverfahrens sieht vor, dass sowohl das Deckfurnierstück als auch das Heizelement vor dem Verfahrensschritt des Vorsehens von Klebemitteln jeweils separat einem Verformungsschritt zur Herstellung einer dauerhaften Verformung unterzogen werden. Danach werden dann die Klebemittel vorgesehen und im Anschluss daran folgt der Verfahrensschritt der Herstellung einer untrennbaren Verbindung zwischen Deckfurnierstück und Heizelement.

Bei allen drei vorangehend genannten Verfahrensvarianten ist das Heizelement bevorzugt untrennbar mit einer Blindfurnierschicht und/oder einem Trägerstück verbunden. Dadurch lassen sich auch sehr dünne Heizelemente mit ebenso dünnen Deckfurnierstücken auf eine einfache Weise verarbeiten.

Ebenso ist vorstellbar, dass das Deckfurnierstück als untrennbares Laminat einer Deckfurnierschicht und einer oberen Blindfurnierschicht bereitgestellt wird.

In einer weiteren Variante des Herstellungsverfahrens wird das Furnierelement nach dem Verfahrensschritt der Herstellung einer untrennbaren Verbindung auf einem Trägerstück in einem weiteren Verfahrensschritt befestigt.

Die auf das Deckfurnierstück aufgebrachten Klebemittel sind bei allen genannten Verfahrensvarianten bevorzugt als Leimpapier oder als aufgetragene Leimschicht ausgebildet.

Weitere Vorteile und Merkmale der Erfindung werden im Zusammenhang mit den Figuren verdeutlicht. Es zeigen:
- Fig. 1 -: einen schematischen Schichtaufbau eines Lenkradkranz-Abschnittes mit einem erfindungsgemäßen Furnierstück in einer perspektivischen Ansicht;
- Fig. 2a -: eine Querschnittansicht des schematischen Schichtaufbaus einer ersten Ausführungsform des erfindungsgemäßen Furnierstücks;
- Fig. 2b -: eine Querschnittansicht gemäß Figur 2a einer zweiten Ausführungsform;
- Fig. 2c -: eine Querschnittsansicht einer dritten Ausführungs-form;
- Fig. 2d -: eine Querschnittsansicht einer vierten Ausführungsform;
- Fig. 3 -: eine Aufsicht eines Heizelementes mit aufgedruckten elektrischen Heizleiterbahnen;
- Fig. 4a-4d -: eine schematische Darstellung der Verfahrensschritte eines ersten Furnierelement-Herstellungsverfahrens;
- Fig. 5a-5d -: ein Verfahren gemäß Fig. 4a-4d, wobei ein abgewandeltes Heizelement eingesetzt wird;
- Fig. 6a-6d -: eine schematische Darstellung der Verfahrensschritte eines zweiten Furnierelement-Herstellungsverfahrens;
- Fig. 7a-7d -: ein Verfahren gemäß Fig. 6a-6d, wobei ein abgewandeltes Heizelement eingesetzt wird;
- Fig. 8a-8d -: eine schematische Darstellung der Verfahrensschritte eines dritten Furnierelement-Herstellungsverfahrens und
- Fig. 9a-9d -: ein Verfahren gemäß Fig. 8a-8d, wobei ein abgewandeltes Heizelement eingesetzt wird.

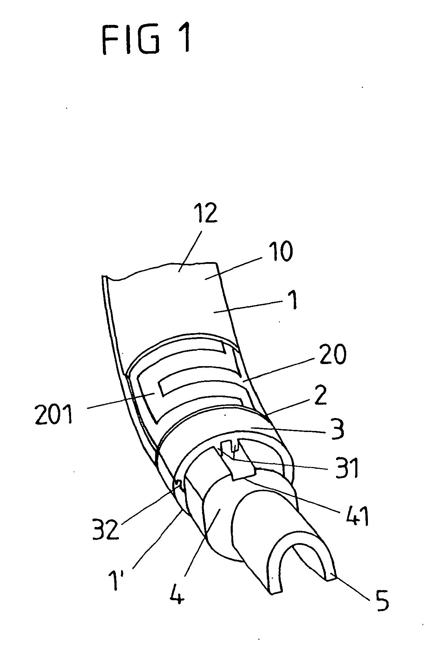

Figur 1 zeigt die perspektivische Ansicht eines Lenkradkranz-Abschnittes mit zwei halbschalenförmigen erfindungsgemäßen Furnierelementen. Die beiden Furnierelemente umschließen den Lenkradkranz bezüglich dessen Durchmessers vollständig. Die äußerste Schicht der beiden Furnierelemente wird jeweils durch ein Deckfurnierstück 1, 1' mit mindestens einer Schicht aus Holz- oder Holzimitat gebildet. Jedes Deckfurnierstück 1, 1' umfasst eine ganz außen und daher sichtbar angeordnete Deckfurnierschicht 10 aus einem optisch ansprechenden Holz oder aus Holzimitat. Dadurch erhält der Lenkradkranz des Kfz-Lenkrades die optische Anmutung eines Holzlenkrades.

Zur Verdeutlichung des Lenkrad-Schichtaufbaus ist dieser perspektivisch ausgehend vom inneren Lenkradkranz-Skelett 5 dargestellt. Das Lenkradkranz-Skelett 5 ist mit einem Überzug aus Schaumkunststoff 4, vorzugsweise aus Polyurethan oder aus expandierbarem Polypropylen umkleidet. Dieser Schaumkunststoff 4 dient in bekannter Weise dazu, kinetische Aufprallenergie des Kraftfahrzeugführers im Crash-Fall durch Verformung aufzunehmen. Das Lenkradkranz-Skelett 5 und der dieses umgebende Schaumkunststoff 4 bilden somit den Basislenkradkranz. In den Schaumkunststoff 4 dieses Basislenkradkranzes können wie in Figur 1 dargestellt, Haltestrukturen 41 eingeformt sein, die mit entsprechenden Montagemitteln 31 der den Basislenkradkranz umschließenden Furnierelemente zusammenwirken, um die Furnierelemente am Basislenkradkranz zu fixieren. In Figur 1 sind die Haltestrukturen 41 als auf dem Basis-Lenkradkranz umlaufende Nuten ausgebildet. In diese Nuten 41, greifen die Montagemittel 31 der Furnierelemente in Form einer Federvorrichtung ein, so dass Furnierelement und Basislenkradkranz bei diesem Ausführungsbeispiel mittels einer Nut-Feder-Verbindungsvorrichtung 31, 41 aneinander fixiert sind.

Es ist selbstverständlich, dass fachübliche, alternativ ausgebildete Haltestrukturen 41 mit entsprechenden Montagemitteln 31 zusammenwirken können. Wesentlich ist jeweils, dass die Furnierelemente durch deren Fixierung am Basislenkradkranz gegen ein Verdrehen um und/oder gegen ein Verrutschen auf dem Basislenkradkranz abgesichert sind.

In Figur 1 ist aufgrund der perspektivischen Darstellung nur die obere umlaufende Nut 41 zur Fixierung des oberen Furnierelements erkennbar. Entweder ist die untere Haltestruktur 41 im Wesentlichen spiegelsymmetrisch in der gleichen Nutform ausgebildet oder es ist eine andere Form der Haltestrukturen 41 für das untere Furnierelement vorgesehen. Bei der letztgenannten Variante ist es möglich, durch die unterschiedliche Ausbildung der Haltestrukturen 41 die räumliche Zuordnung der einzelnen Furnierelemente entlang des Lenkradkranzes festzulegen. Bei der Montage der Furnierelemente wird auf diese Weise deren Montage an einer fehlerhaften Position entlang des Lenkradkranzes vermieden.

Die Montagemittel 31 sind einstückig mit dem Trägerstück 3 des Furnierelementes ausgebildet. Die einstückige Ausbildung ist besonders einfach dadurch zu realisieren, dass das Trägerstück 3 in Form eines Kunststoff-Spritzgussteiles vorgesehen ist. Die vorgeformte und laminierte Einheit von Deckfurnierstück 1 und Heizelement 2 lassen sich dazu direkt zur Bildung des Trägerstücks 3 mit Kunststoff hinterspritzen. Ebenso ist jedoch denkbar, ein Trägerstück 3 aus Holz vorzusehen und die vorgeformte und laminierte Einheit von Deckfurnierstück 1 und Heizelement 2 darauf zu montieren oder Deckfurnierstück 1, Heizelement 2 und Trägerstück 3 in einem Arbeitsgang zu laminieren.

Auf dem Trägerstück 3 ist das flächige Heizelement 2 mit einer mäanderförmigen elektrischen Heizleiterbahn 201 erkennbar. Dieses Heizelement 2 lässt sich beispielsweise mit einer Heizschicht 20 aus einer Folie oder einem Vlies ausbilden, auf die die elektrischen Heizleiterbahnen 201 in der gewünschten Geometrie aufgedruckt sind. Das Heizelement 2 dient mit seiner Heizschicht 20 zur Beheizung des darüber angeordneten aus mindestens einer Holz- und/oder Holzimitatschicht bestehenden Deckfurnierstückes 1. Das Deckfurnierstück 1 weist eine außen sichtbar angeordnete Deckfurnierschicht 10 auf, die den optisch-ästhetischen "Holzeindruck" des Lenkradkranzes bestimmt. Diese Deckfurnierschicht 10 ist von einer dünnen, üblicherweise transparenten Decklackschicht 12 überzogen. Diese Decklackschicht 12 ist üblicherweise dünn, d.h. mit einer Stärke < 1 mm ausgebildet. Insbesondere wenn die Wärmeleitungseigenschaften des Decklacks gut sind, ist jedoch auch denkbar, die Decklackschicht 12 stärker als 1 mm auszubilden.

Die beiden bezüglich des Basislenkradkranzes als Halbschalen ausgebildeten Furnierelemente umschließen den Basislenkradkranz vollständig. Um an den aneinander stoßenden Kanten der Furnierelemente einen möglichst glatten Übergang der außen angeordneten Deckfurnierschichten 10 zu gewährleisten, sind entlang dieser Kanten mechanische Verbindungsmittel 32 vorgesehen. In Figur 1 sind diese als Nut-Feder-Verbindung ausgebildet.

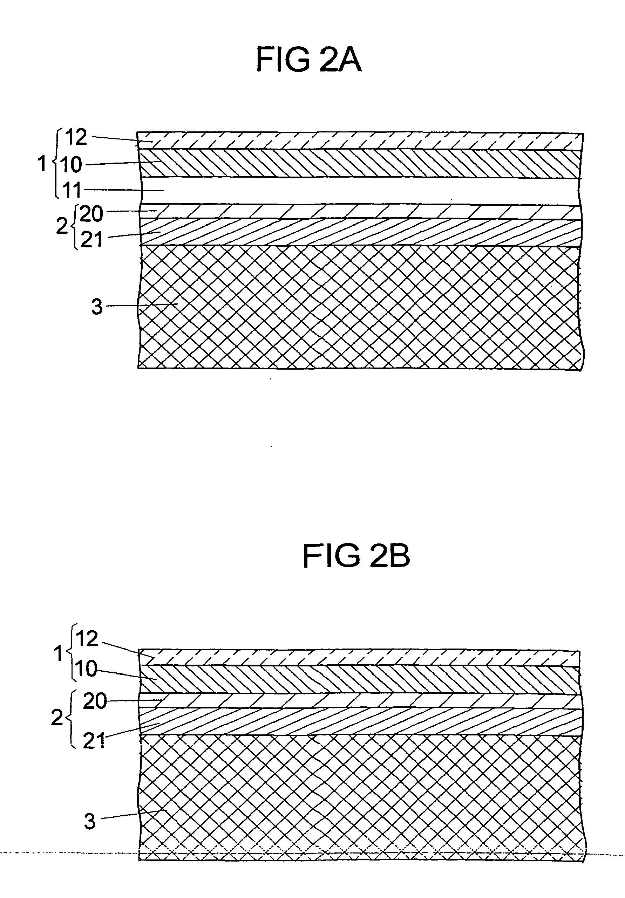

Die Figuren 2a bis 2d zeigen verschiedene Ausführungsformen des erfindungsgemäßen, ein Deckfurnierstück 1, ein Heizelement 2 und ein Trägerstück 3 umfassenden, Furnierelements im Detail.

Bei der in Figur 2a gezeigten ersten Ausführungsform ist die Heizschicht 20 des Heizelements 2 symmetrisch von einer unteren Blindfurnierschicht 21 und einer oberen Blindfurnierschicht 11 umgeben. Die Bezeichnungen "unten" und "oben" beziehen sich im Folgenden immer auf die Orientierung, dass "oben" die äußere, sichtbare Deckfurnierschicht 10 angeordnet ist. Der in Figur 2a gezeigte symmetrische Aufbau stellt sicher, dass beim Herstellen einer untrennbaren Verbindung zwischen Heizelement 2 und Deckfurnierstück 1, was üblicherweise mit deren Verformung in eine schalenartige Form einhergeht, ein mechanisches Verziehen der auf diese Weise laminierten Furnierschale verhindert wird.

Nicht erfindungsgemäß ist es jedoch ebenso denkbar, wie in Figur 2b dargestellt, das Deckfurnierstück 1 aus einer einzigen Deckfurnierschicht 10 ohne Blindfurnier unmittelbar auf die Heizschicht 20 des Heizelementes 2 aufzulaminieren. Im übrigen entspricht der in Figur 2b gezeigte Aufbau dem aus Figur 2a.

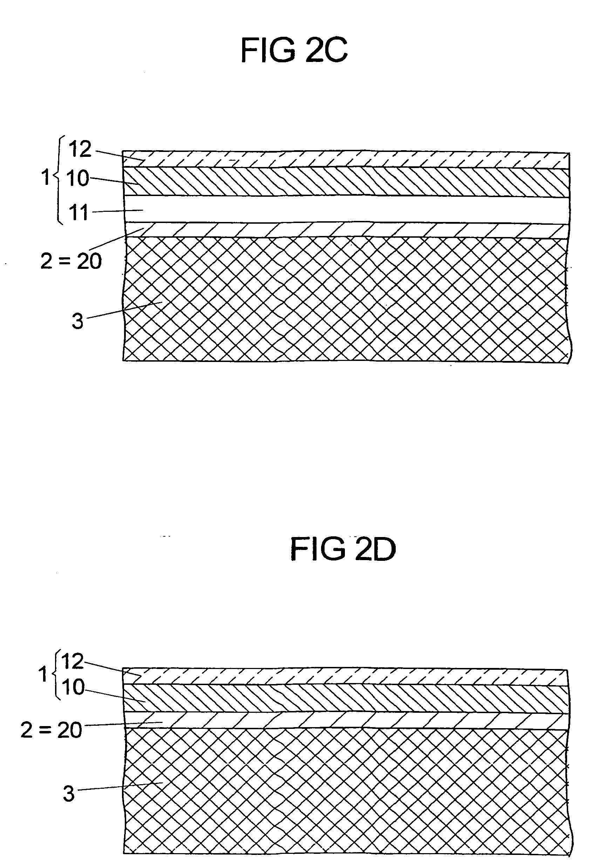

In Figur 2c ist ein weiterer "asymmetrischer" Schichtaufbau gezeigt. Bei dieser Ausführungsform umfasst das Heizelement 2 nur die Heizschicht 20, ohne dass sich auf der dem Deckfurnierstück 1 abgewandten Seite ein unteres Blindfurnier anschließt. Im übrigen entspricht der in Figur 2c gezeigte Aufbau dem aus Figur 2a.

Figur 2d zeigt schließlich eine weitere Ausführungsform des Furnierelements mit einem symmetrischen Schichtaufbau. Hier wird gänzlich auf den Einsatz von Blindfurnieren verzichtet, so dass das Deckfurnierstück 1 aus einer einzigen Deckfurnierschicht 10 und das Heizelement 2 aus einer einzelnen Heizschicht 20 besteht.

Bei allen vier der beispielhaft dargestellten Schichtaufbauten weist die Deckfurnierschicht 10 eine auf ihrer Oberseite angeordnete Decklackschicht 12 auf. Diese Decklackschicht 12 ist üblicherweise weniger als 1 mm stark.

Welche der vorangehend dargestellten vier Ausführungsformen im Einzelfall zu wählen ist, hängt insbesondere von den vorliegenden Materialeigenschaften und -stärken der Deckfurnierschicht 10 und der Heizschicht 20 ab. Alle Ausführungsformen stimmen jedoch dahingehend überein, dass der Abstand zwischen der Heizschicht 20 und der davon abgewandten Oberfläche der Decklackschicht 12 auf der Deckfurnierschicht 10 deutlich weniger als 3 mm beträgt. Diese Strecke muss die durch die Heizschicht 20 des Heizelements 2 generierte Wärme durchdringen, um die vom Fahrzeugführer berührte Oberfläche der Deckfurnierschicht 10 zu erreichen. Dadurch, dass eine weniger als 3 mm starke Holz(laminat)schicht "durchheizt" werden muss, kann trotz der schlechten Wärmeleitungseigenschaften des Holzes ein rasches Aufwärmen (<3 min) der Oberfläche der Deckfurnierschicht 10 auf dem Furnierelement gewährleistet werden.

Es ist üblich, sowohl Deck- als auch Blindfurnierschichten mit einer Stärke von ca. 0,6 mm einzusetzen. Beim Laminieren und Verformen des Deckfurnierstückes 1 mit dem Heizelement 2 kommt es wegen der dünnen Furniere üblicherweise zu Rissbildungen im Deckfurnierstück 1. Wenn die Heizschicht 20 eine an das Deckfurnierstück 1 angepasste Farbgebung aufweist, wird auf diese einfache Weise die optische Anmutung der Deckfurnierschicht 10 aufgrund der angepassten Farbgebung nicht wesentlich gestört. Die entstandenen Risse selbst werden beim Lackieren der Deckfurnierschicht 10 durch den Decklack 12 ausgefüllt, so dass auch die Haptik der Deckfurnierschicht 10 trotz vorhandener Risse nicht beeinträchtigt ist.

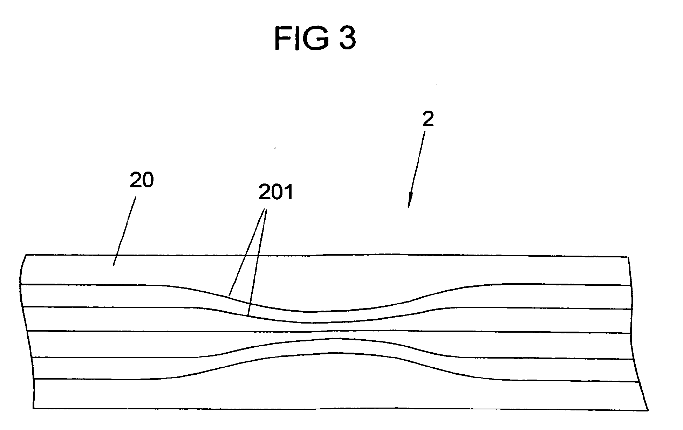

Figur 3 zeigt beispielhaft die Aufsicht einer Heizschicht 20 mit elektrischen Heizleiterbahnen 201. Die Heizschicht 20 lässt sich beispielsweise aus einem geeigneten Vlies oder aus einer Folie ausbilden, wobei die elektrischen Heizleiterbahnen 201 in der gewünschten Geometrie auf die Heizschicht 20 aufgedruckt sind. Ebenso ist denkbar, dass die Heizleiterbahnen 201 umgeben von Vlieslagen eingebettet angeordnet sind.

Dadurch, dass die Leiterbahnen 201 in gewissen Bereichen einen geringeren räumlichen Abstand zueinander einnehmen, wird gewährleistet, dass die Aufheizzeit des Deckfurnierstückes 1 in diesen Bereichen besonders kurz ist.

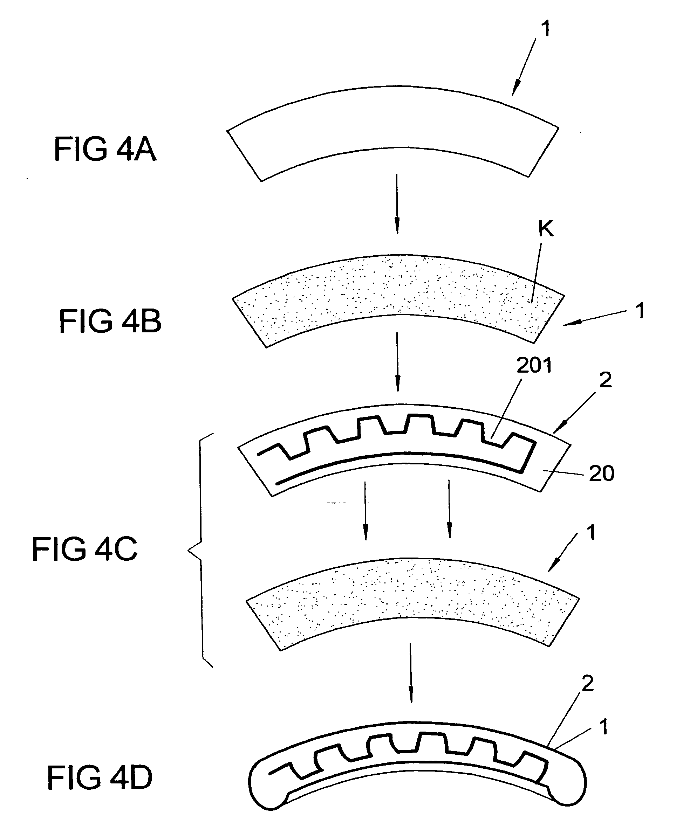

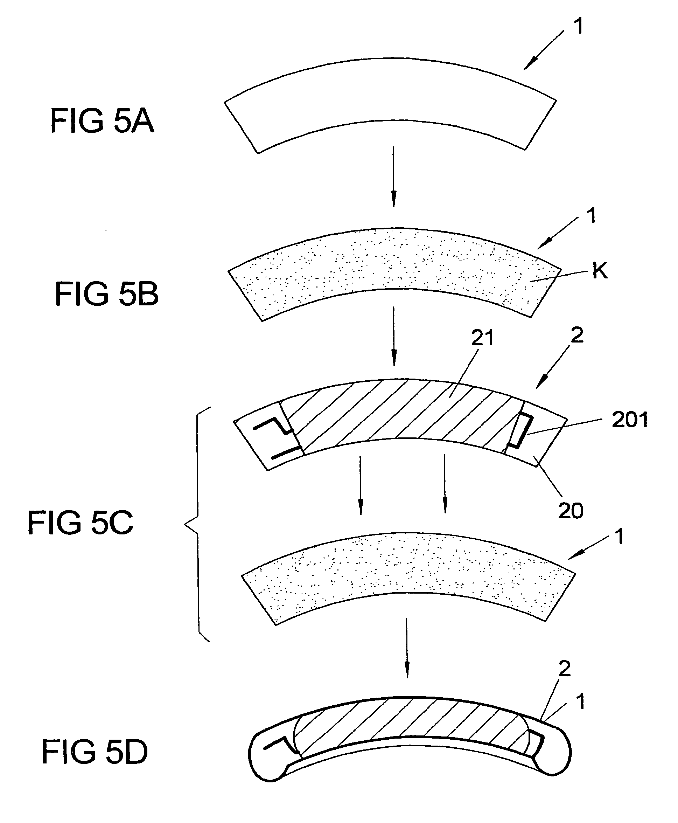

Im Folgenden werden in den Figuren 4a bis 4d und 5a bis 5d zwei Verfahrensvarianten zur Herstellung der erfindungsgemäßen Furnierelemente beschrieben.

Im ersten Verfahrensschritt der Figur 4a wird ein Deckfurnierstück 1 bereitgestellt. Dieses Deckfurnierstück 1 besteht zum Beispiel aus einer einzigen Deckfurnierschicht 10 (vgl. Figur 2b) oder aus einem Laminat einer Deckfurnierschicht 10 mit einer Blindfurnierschicht 11 (vgl. Figur 2a). In dem in Figur 4b dargestellten Verfahrensschritt wird eine Oberfläche des bereitgestellten Deckfurnierstückes 1 und/oder die nicht sichtbare Unterseite des in Figur 4c gezeigten Heizelements mit einem Klebemittel K versehen. Dieses Klebemittel K wird üblicherweise in Form eines flüssig aufgetragenen Leims oder eines passend zugeschnittenen Leimpapiers eingesetzt.

Figur 4c zeigt das Laminieren des Deckfurnierstücks 1 mit dem Heizelement 2, wodurch eine untrennbare Verbindung realisiert wird. Das Heizelement 2 umfasst bei dieser Ausführungsform des Herstellungsverfahrens ausschließlich eine Heizschicht 20 mit darauf angeordneten elektrischen Heizleiterbahnen 201 (vgl. Figur 2c oder 2d). Der in Figur 4c dargestellte Verfahrensschritt des Herstellens einer untrennbaren Verbindung (Laminieren) zwischen Deckfurnierstück 1 und Heizelement 2 geht bei dieser ersten Variante des Herstellungsverfahrens einher mit einer dauerhaften Verformung dieses Laminats zur Herstellung eines schalenförmigen Furnierelements. Das Ergebnis dieses Verfahrensschrittes ist beispielhaft in Figur 4d gezeigt.

In einem letzten nicht dargestellten Verfahrensschritt wird die Deckfurnierschicht 10 auf der Oberfläche des Deckfurnierstückes 1 mit einer dünnen, d.h.< 1 mm, Decklackschicht 12 lackiert.

Die in den Figuren 5a bis 5d gezeigte Herstellungsverfahren entspricht der vorangehend beschriebenen ersten Variante, wobei der Unterschied besteht, dass das Heizelement 2 neben einer Heizschicht 20 mit darauf vorgesehenen elektrischen Heizleiterbahnen 201 ein auflaminiertes unteres Blindfurnier 21 umfasst (vgl. Figur 2a).

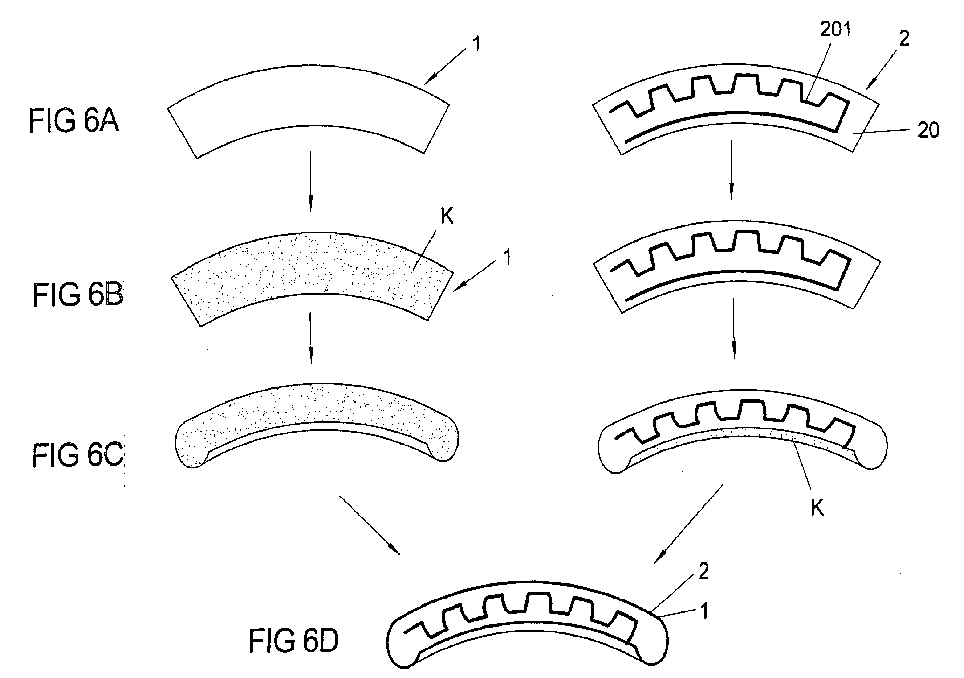

Die Figuren 6a bis 6d zeigen eine zweite Variante des erfindungsgemäßen Herstellungsverfahrens. Das in den Figuren 6a und 6b gezeigte Bereitstellen des Deckfurnierstückes 1 und des Heizelements 2 bzw. des Vorsehens von Klebemitteln K entspricht den vorangehend beschriebenen Verfahrensschritten der Figuren 4a und 4b. Im Unterschied zum ersten Herstellungsverfahren, werden noch vor dem Herstellen der untrennbaren Verbindung das Deckfurnierstück 1 und das Heizelement 2 jeweils separat einem Verformungsschritt zur Herstellung einer dauerhaften Verformung unterzogen. Dies ist schematisch in Figur 6c dargestellt. Anschließend erst werden Deckfurnierstück 1 und Heizelement 2 laminiert. Das in Figur 6d gezeigte Ergebnis entspricht dem in Figur 4d gezeigten Verfahrensergebnis.

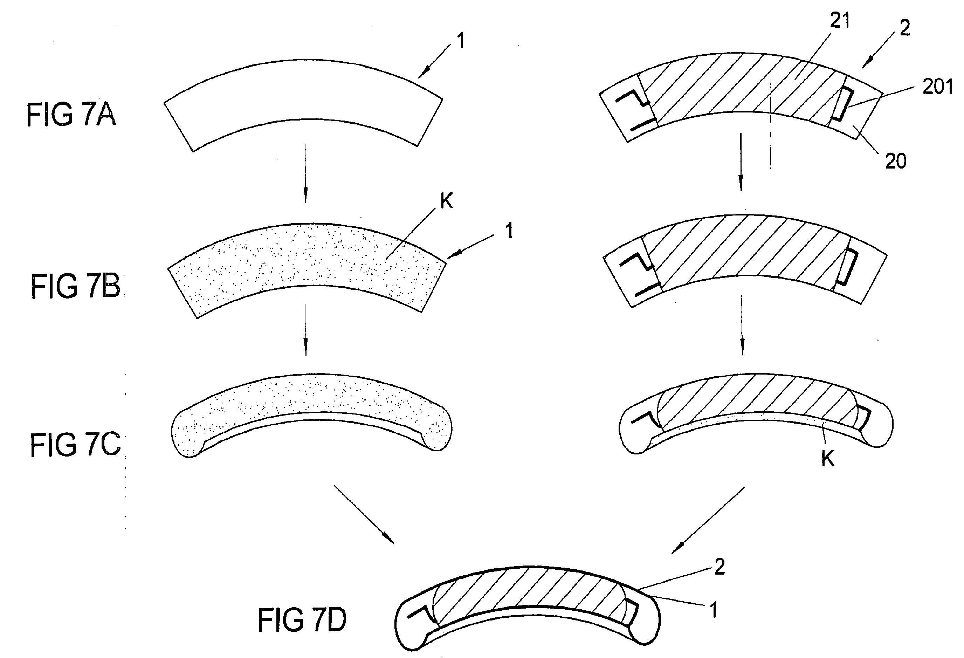

Das in den Figuren 7a bis 7d gezeigte Herstellungsverfahren entspricht dem der Figuren 6a bis 6d, wobei der einzige Unterschied darin besteht, dass ein Heizelement 2 mit einer Blindfurnierschicht 21 zum Einsatz kommt. Das in Figur 7d gezeigte Verfahrensprodukt entspricht dem aus Figur 5d.

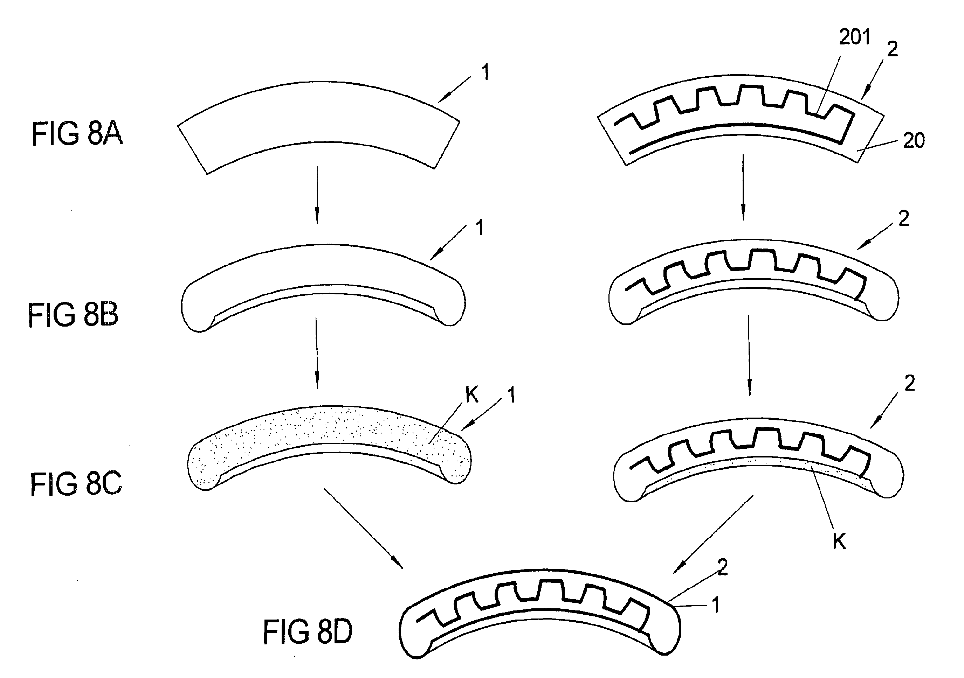

Die Figuren 8a bis 8d zeigen eine dritte Variante des erfindungsgemäßen Herstellungsverfahrens. Das in der Figur 8a gezeigte Bereitstellen des Deckfurnierstückes 1 und des Heizelements 2 entspricht dem vorangehend beschriebenen Verfahrensschritt der Figuren 4a bzw. 6a. Im Unterschied zum zweiten Herstellungsverfahren, werden jedoch noch vor dem Verfahrensschritt des Vorsehens von Klebemitteln K das Deckfurnierstück 1 und das Heizelement 2 jeweils separat einem Verformungsschritt zur Herstellung einer dauerhaften Verformung unterzogen. Dies ist schematisch in Figur 8b dargestellt. Anschließend werden Deckfurnierstück 1 und/oder Heizelement 2 mit Klebemittel K versehen (Fig. 8c) und schließlich laminiert (Fig. 8c). Das in Figur 8d gezeigte Ergebnis entspricht dem in Figur 4d bzw. 6d gezeigten Verfahrensergebnis.

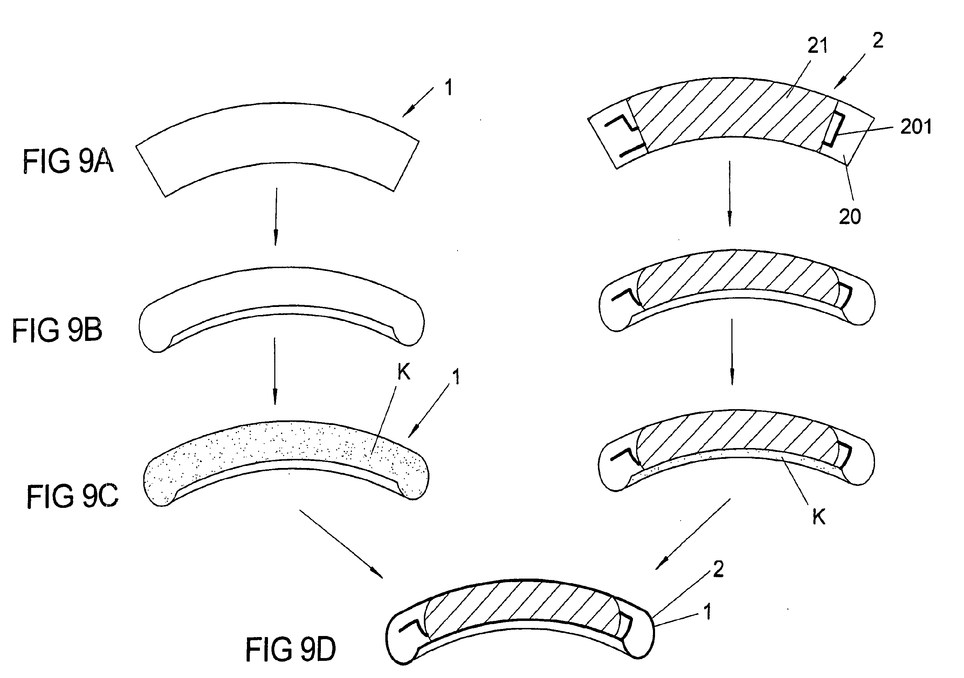

Das in den Figuren 9a bis 9d gezeigte Herstellungsverfahren entspricht dem der Figuren 8a bis 8d, wobei der einzige Unterschied darin besteht, dass ein Heizelement 2 mit einer Blindfurnierschicht 21 zum Einsatz kommt. Das in Figur 9d gezeigte Verfahrensprodukt entspricht dem aus Figur 7d bzw. Figur 5d.

Bei allen drei Varianten des erfindungsgemäßen Herstellungsverfahrens schließt sich jeweils noch ein jeweils nicht dargestellter Verfahrensschritt zum Aufbringen der Decklackschicht 12 auf die Deckfurnierschicht 10 des Deckfurnierstücks 1 an.

### Bezugszeichenliste

- 1: Deckfurnierstück
- 10: Deckfurnierschicht
- 11: Obere Blindfurnierschicht
- 12: Decklackschicht
- 2: Heizelement
- 20: Heizschicht
- 201: Elektrische Heizleiterbahnen
- 21: Untere Blindfurnierschicht
- 3: Trägerstück
- 31: Montagemittel
- 32: Mechanische Verbindungsmittel
- 4: Schaummantel
- 41: Haltestrukturen
- 5: Lenkradskelett

## Patentansprüche

1. Beheizbares Furnierelement für Kfz-Lenkräder umfassend:
• ein Deckfurnierstück (1) mit mindestens einer Schicht aus Holz- und/oder Holzimitat
• ein untrennbar mit dem Deckfurnierstück (1) verbundenes Heizelement (2) zur Beheizung des Deckfurnierstückes (1), und
• einer dem Heizelement (2) abgewandten Seite des Deckfurnierstückes,
• wobei das Furnierelement nach der Herstellung der untrennbaren Verbindung mit einem Kunststoff hinterspritzt wird und **dadurch** ein Trägerstück (3) ausgebildet ist
**dadurch gekennzeichnet,**
**dass** das Deckfurnierstück (1) über ein zusätzliches zwischen dem Deckfurnierstück (1) und dem Heizelement (2) versehenes Klebemittel (K) unmittelbar und untrennbar mit dem Heizelement (2) verbunden ist und dass das Deckfurnierstück auf der dem Heizelement (2) abgewandten Seite mit einer Decklackschicht (12) versehen ist.

2. Furnierelement gemäß Anspruch 1, **dadurch gekennzeichnet, dass** das Heizelement (2) eine Heizschicht (20) umfasst und auf seiner dem Deckfurnierstück (1) abgewandten Seite untrennbar mit dem Trägerstück (3) verbunden ist.

3. Furnierelement gemäß Anspruch 2, **dadurch gekennzeichnet, dass** das Heizelement (2) mindestens eine an das Trägerstück (3) angrenzende untere Blindfurnierschicht (21) aufweist.

4. Furnierelement gemäß Anspruch 2 oder 3, **dadurch gekennzeichnet, dass** das Trägerstück (3) ein aus Kunststoff und/oder Holz bestehendes Montagemittel (31) zur Montage des Furnierelements auf einem Kfz-Lenkrad aufweist.

5. Furnierelement gemäß einem der Ansprüche 1 bis 4, **dadurch gekennzeichnet, dass** das Heizelement (2) eine dem Deckfurnierstück (1) angepasste Farbgebung aufweist derart, dass das Heizelement durch Risse, die bei einer Verformung des Deckfurnierstückes auftreten können, nicht auffällig sichtbar ist.

6. Furnierelement gemäß einem der Ansprüche 1 bis 5, **dadurch gekennzeichnet, dass** das Deckfurnierstück (1) auf seiner dem Heizelement (2) abgewandten Seite eine Deckfurnierschicht (10) und auf seiner anderen Seite ein mit der Deckfurnierschicht (10) untrennbar verbundene obere Blindfurnierschicht (11) umfasst.

7. Furnierelement gemäß einem der Ansprüche 1 bis 5, **dadurch gekennzeichnet, dass** das Deckfurnierstück (1) aus einer einzigen als Deckfurnierschicht (11) ausgebildeten Schicht besteht.

8. Furnierelement gemäß Anspruch 6 oder 7, **dadurch gekennzeichnet, dass** die Deckfurnierschicht (11) auf ihrer vom Heizelement (2) abgewandten Seite mit einer Decklackschicht (12) versehen ist.

9. Furnierelement gemäß einem der vorangehenden Ansprüche, **dadurch gekennzeichnet, dass** die Heizschicht (20) des Heizelementes (2) als Heizgewirke, Heizgewebe, Heizfolie oder als Vlies jeweils mit aufgedruckten oder eingelagerten elektrischen Heizleiterbahnen (201) ausgebildet ist.

10. Furnierelement gemäß Anspruch 9, **dadurch gekennzeichnet, dass** der Widerstand der elektrischen Leiterbahnen (201) und/oder deren räumlicher Abstand zueinander variiert ausgebildet sind.

11. Furnierelement gemäß einem der vorangehenden Ansprüche, **dadurch gekennzeichnet, dass** das Furnierelement (1) einen schalenförmigen Aufbau derart aufweist, dass sich der Lenkradkranz eines Kfz-Lenkrades abschnittweise durch das Furnierelement umgreifen lässt.

12. Furnierelement gemäß Anspruch 11, **dadurch gekennzeichnet, dass** das Furnierelement mechanische Verbindungsmittel (32) aufweist, die beim Zusammenfügen mehrerer Furnierelemente um einen Abschnitt des Lenkradkranzes zusammenwirken.

13. Furnierelement gemäß Anspruch 12, **dadurch gekennzeichnet, dass** die mechanischen Verbindungsmittel als Nut- und Federelemente (32) ausgebildet sind.

14. Furnierelement gemäß einem der Ansprüche 10 bis 13, **dadurch gekennzeichnet, dass** das Furnierelement (1) halbschalenförmig derart ausgebildet ist, dass es den Lenkradkranz entlang dessen halben Querschnittsumfangs umgreift.

15. Lenkrad mit mindestens einem Furnierelement gemäß einem der Ansprüche 1 bis 14.

16. Verfahren zur Herstellung eines Furnierelementes gemäß einem der Ansprüche 1 bis 14 mit den folgenden Schritten:
• Bereitstellen eines zugeschnittenen Deckfurnierstückes (1) bestehend aus mindestens einer Schicht aus Holz- und/oder Holzimitat;
• Vorsehen von Klebemitteln (K) auf einer Seite des Deckfurnierstückes (1) und/oder auf einer Seite eines Heizelementes (2);
• Auflegen des Heizelementes (2) auf die Seite des Deckfurnierstückes (1) und
• Herstellen einer untrennbaren Verbindung zwischen Deckfurnierstück (1) und Heizelement (2), wobei das Furnierelement nach dem Verfahrensschritt zur Herstellung der untrennbaren Verbindung mit einem Kunststoff hinterspritzt wird und **dadurch** ein Trägerstück (3) ausgebildet wird, und wobei
• das Deckfurnierstück (1) in einem Lackierschritt auf seiner vom Heizelement (2) abgewandten Seite mit einer Decklackschicht (12) versehen wird.

17. Verfahren gemäß Anspruch 16, **dadurch gekennzeichnet, dass** gleichzeitig mit dem Verfahrensschritt der Herstellung der untrennbaren Verbindung ein Verformungsschritt zur Herstellung einer dauerhaften Verformung des Deckfurnierstücks (1) und des Heizelements (2) vorgenommen wird.

18. Verfahren gemäß Anspruch 16, **dadurch gekennzeichnet, dass** nach dem Verfahrensschritt des Vorsehens von Klebemitteln (K) sowohl das Deckfurnierstück (1) als auch das Heizelement (2) jeweils einem Verformungsschritt zur Herstellung einer dauerhaften Verformung unterzogen werden.

19. Verfahren gemäß Anspruch 16, **dadurch gekennzeichnet, dass** vor dem Verfahrensschritt des Vorsehens von Klebemitteln (K) sowohl das Deckfurnierstück (1) als auch das Heizelement (2) jeweils einem Verformungsschritt zur Herstellung einer dauerhaften Verformung unterzogen werden.

20. Verfahren gemäß einem der Ansprüche 16 bis 19, **dadurch gekennzeichnet, dass** das Heizelement (2) untrennbar verbunden mit einer Blindfurnierschicht (21) und/oder einem Trägerstück (3) bereitgestellt wird.

21. Verfahren gemäß einem der Ansprüche 16 bis 20, **dadurch gekennzeichnet, dass** das Deckfurnierstück (1) als untrennbares Laminat einer Deckfurnierschicht (10) und einer oberen Blindfurnierschicht (11) bereitgestellt wird.

22. Verfahren gemäß einem der Ansprüche 16 bis 21, **dadurch gekennzeichnet, dass** das Furnierelement nach dem Verfahrensschritt der Herstellung einer untrennbaren Verbindung auf einem Trägerstück (3) befestigt wird.

23. Verfahren gemäß einem der Ansprüche 16 bis 22, **dadurch gekennzeichnet, dass** die Klebemittel (K) als Leimpapier oder als aufgetragene Leimschicht ausgebildet sind.

## Claims

1. Heatable veneer element for motor vehicle steering wheels comprising:
• a covering veneer piece (1) comprising at least one layer of wood and/or imitation wood and
• a heating element (2) which is joined inseparably to the covering veneer piece (1) and serves to heat the covering veneer piece (1), and
• a side of the covering veneer piece facing away from the heating element (2),
• wherein a plastic backing is sprayed onto the veneer element after production of the inseparable bond so as to form a support piece (3),
**characterized in that** the covering veneer piece (1) is joined directly and inseparably to the heating element (2) by means of an additional adhesive (K) provided between the covering veneer piece (1) and the heating element (2) and **in that** the covering veneer piece is provided with a topcoat layer (12) on the side facing away from the heating element (2).

2. Veneer element according to Claim 1, **characterized in that** the heating element (2) comprises a heating layer (20) and on its side facing away from the covering veneer piece (1) is joined inseparably to a support piece (3).

3. Veneer element according to Claim 2, **characterized in that** the heating element (2) has at least one lower core veneer layer (21) adjoining the support piece (3).

4. Veneer element according to Claim 2 or 3, **characterized in that** the support piece (3) has a mounting means (31) comprising plastic and/or wood for mounting the veneer element on a motor vehicle steering wheel.

5. Veneer element according to any of Claims 1 to 4, **characterized in that** the heating element (2) has a coloration matched to the covering veneer piece (1) so that the heating element is not visible and conspicuous as a result of cracks which can occur on deformation of the covering veneer piece.

6. Veneer element according to any of Claims 1 to 5, **characterized in that** the covering veneer piece (1) comprises a covering veneer layer (10) on its side facing away from the heating element (2) and an upper core veneer layer (11) joined inseparably to the covering veneer layer (10) on its other side.

7. Veneer element according to any of Claims 1 to 5, **characterized in that** the covering veneer piece (1) consists of a single layer configured as covering veneer layer (11).

8. Veneer element according to Claim 6 or 7, **characterized in that** the covering veneer layer (11) is provided with a topcoat layer (12) on its side facing away from the heating element (2).

9. Veneer element according to any of the preceding claims, **characterized in that** the heating layer (20) of the heating element (2) is configured as heating knitteds, woven heating fabrics, heating film or as nonwoven, in each case with printed-on or embedded electric heating conductors (201).

10. Veneer element according to Claim 9, **characterized in that** the resistance of the electric conductors (201) and/or their spacing vary.

11. Veneer element according to any of the preceding claims, **characterized in that** the veneer element (1) has a shell-like structure so that the ring of a motor vehicle steering wheel can be surrounded in sections by the veneer element.

12. Veneer element according to Claim 11, **characterized in that** the veneer element has mechanical connecting means (32) which interact on assembly of a plurality of veneer elements around a section of the ring of the steering wheel.

13. Veneer element according to Claim 12, **characterized in that** the mechanical connecting means are configured as tongue-and-groove elements (32).

14. Veneer element according to any of Claims 10 to 13, **characterized in that** the veneer element (1) is configured in the form of a half shell so that it surrounds the ring of the steering wheel along its half cross-sectional circumference.

15. Steering wheel having at least one veneer element according to any of Claims 1 to 14.

16. Process for producing a veneer element according to any of Claims 1 to 14, which comprises the following steps:
• provision of a covering veneer piece (1) which comprises at least one layer of wood and/or imitation wood and has been cut to size;
• provision of adhesives (K) on one side of the covering veneer piece (1) and/or on one side of a heating element (2);
• placing of the heating element (2) on the side of the covering veneer piece (1) and
• production of an inseparable bond between covering veneer piece (1) and heating element (2), wherein a plastic backing is sprayed onto the veneer element after the process step for producing the inseparable bond so as to form a support piece (3) and
• the covering veneer piece (1) is provided in a surface coating step with a topcoat layer (12) on its side facing away from the heating element (2).

17. Process according to Claim 16, **characterized in that** a shaping step for producing a permanent deformation of the covering veneer piece (1) and of the heating element (2) is carried out simultaneously with the process step of production of the inseparable bond.

18. Process according to Claim 16, **characterized in that** both the covering veneer piece (1) and the heating element (2) are subjected to a shaping step for producing a permanent deformation after the process step of provision of adhesives (K).

19. Process according to Claim 16, **characterized in that** both the covering veneer piece (1) and the heating element (2) are subjected to a shaping step for producing a permanent deformation prior to the process step of provision of adhesives (K).

20. Process according to any of Claims 16 to 19, **characterized in that** the heating element (2) is provided in a form which is inseparably joined to a core veneer layer (21) and/or a support piece (3).

21. Process according to any of Claims 16 to 20, **characterized in that** the covering veneer piece (1) is provided as an inseparable laminate of a covering veneer layer (10) and an upper core veneer layer (11).

22. Process according to any of Claims 16 to 21, **characterized in that** the veneer element is affixed to a support piece (3) after the process step of production of an inseparable bond.

23. Process according to any of Claims 16 to 22, **characterized in that** the adhesives (K) are configured as sized paper or as applied glue layer.

## Revendications

1. Elément de placage chauffable pour volants de direction de véhicules automobiles, comprenant :
• une pièce (1) de placage en applique, présentant au moins une couche en bois et/ou en imitation bois,
• un élément chauffant (2) relié à la pièce (1) de placage en applique, de manière indissociable, en vue de chauffer ladite pièce (1) de placage en applique, et
• une face de la pièce de placage en applique qui est tournée à l'opposé de l'élément chauffant (2),
• sachant que, après l'instauration de la liaison indissociable, l'élément de placage est garni d'une matière plastique rapportée par injection, en donnant ainsi naissance à une pièce de support (3),
**caractérisé par le fait**
**que** la pièce (1) de placage en applique est reliée directement et indissociablement à l'élément chauffant (2), par l'intermédiaire d'un agent adhésif supplémentaire (K) interposé entre ladite pièce (1) de placage en applique et ledit élément chauffant (2) ; et par le fait que ladite pièce de placage en applique est munie d'une couche (12) de laque de recouvrement sur la face tournée à l'opposé de l'élément chauffant (2).

2. Elément de placage selon la revendication 1, **caractérisé par le fait que** l'élément chauffant (2) englobe une couche chauffante (20) et est relié à la pièce de support (3), de manière indissociable, sur sa face tournée à l'opposé de la pièce (1) de placage en applique.

3. Elément de placage selon la revendication 2, **caractérisé par le fait que** l'élément chauffant (2) comporte au moins une couche inférieure de placage aveugle (21), limitrophe de la pièce de support (3).

4. Elément de placage selon la revendication 2 ou 3, **caractérisé par le fait que** la pièce de support (3) présente un moyen de montage (31) consistant en une matière plastique et/ou en du bois, en vue du montage dudit élément de placage sur un volant de direction de véhicule automobile.

5. Elément de placage selon l'une des revendications 1 à 4, **caractérisé par le fait que** l'élément chauffant (2) offre une nuance colorée adaptée à la pièce (1) de placage en applique, de telle sorte que ledit élément chauffant ne soit pas rendu ostensible par des fissures susceptibles de survenir lors d'une déformation de ladite pièce de placage en applique.

6. Elément de placage selon l'une des revendications 1 à 5, **caractérisé par le fait que** la pièce (1) de placage en applique comprend une couche (10) de placage en applique sur sa face tournée à l'opposé de l'élément chauffant (2) et, sur son autre face, une couche supérieure de placage aveugle (11) reliée, de manière indissociable, à ladite couche (10) de placage en applique.

7. Elément de placage selon l'une des revendications 1 à 5, **caractérisé par le fait que** la pièce (1) de placage en applique est constituée d'une unique couche réalisée sous la forme d'une couche (11) de placage en applique.

8. Elément de placage selon la revendication 6 ou 7, **caractérisé par le fait que** la couche (11) de placage en applique est pourvue d'une couche (12) de laque de recouvrement sur sa face tournée à l'opposé de l'élément chauffant (2).

9. Elément de placage selon l'une des revendications précédentes, **caractérisé par le fait que** la couche chauffante (20) de l'élément chauffant (2) est réalisée sous la forme d'un entrelacs chauffant, d'un tissu chauffant, d'un feuil chauffant ou d'un non-tissé comportant, respectivement, des pistes chauffantes électriques (201) imprimées ou intégrées.

10. Elément de placage selon la revendication 9, **caractérisé par le fait que** la résistance des pistes (201) électriquement conductrices, et/ou leur espacement mutuel dans l'espace, est (sont) de réalisation variable.

11. Elément de placage selon l'une des revendications précédentes, **caractérisé par le fait que** ledit élément de placage (1) possède un agencement structurel en forme de coque, de telle sorte que la couronne d'un volant de direction de véhicule automobile puisse être ceinturée, par zones, par ledit élément de placage.

12. Elément de placage selon la revendication 11, **caractérisé par le fait que** ledit élément de placage présente des moyens mécaniques de liaison (32) qui, lors de l'assemblage de plusieurs éléments de placage, coopèrent autour d'une zone de la couronne du volant de direction.

13. Elément de placage selon la revendication 12, **caractérisé par le fait que** les moyens mécaniques de liaison sont conçus comme des éléments (32) à rainures et languettes.

14. Elément de placage selon l'une des revendications 10 à 13, **caractérisé par le fait que** ledit élément de placage (1) revêt la forme d'une demi-coque, de telle sorte qu'il ceinture la couronne du volant de direction le long du demi-périmètre de la section transversale de cette dernière.

15. Volant de direction doté d'au moins un élément de placage conforme à l'une des revendications 1 à 14.

16. Procédé de fabrication d'un élément de placage conforme à l'une des revendications 1 à 14, englobant les étapes suivantes :
• mise à disposition d'une pièce poinçonnée (1) de placage en applique, constituée d'au moins une couche en bois et/ou en imitation bois ;
• présence d'agents adhésifs (K) sur une face de ladite pièce (1) de placage en applique et/ou sur une face d'un élément chauffant (2) ;
• mise en place dudit élément chauffant (2) sur la face de ladite pièce (1) de placage en applique, et
• instauration d'une liaison indissociable entre la pièce (1) de placage en applique et l'élément chauffant (2), sachant que l'élément de placage est garni d'une matière plastique rapportée par injection, après l'étape opératoire visant à instaurer la liaison indissociable, ce qui donne naissance à une pièce de support (3), et sachant que,
• lors d'une étape de laquage, la pièce (1) de placage en applique est munie d'une couche (12) de laque de recouvrement sur sa face tournée à l'opposé de l'élément chauffant (2).

17. Procédé selon la revendication 16, **caractérisé par le fait qu'**une étape de déformation est exécutée en simultanéité avec l'étape opératoire d'instauration de la liaison indissociable, afin de provoquer une déformation durable de la pièce (1) de placage en applique et de l'élément chauffant (2).

18. Procédé selon la revendication 16, **caractérisé par le fait que**, après l'étape opératoire consistant à prévoir des agents adhésifs (K), tant la pièce (1) de placage en applique, que l'élément chauffant (2), sont respectivement soumis à une étape de déformation afin de provoquer une déformation durable.

19. Procédé selon la revendication 16, **caractérisé par le fait que**, avant l'étape opératoire consistant à prévoir des agents adhésifs (K), tant la pièce (1) de placage en applique, que l'élément chauffant (2), sont respectivement soumis à une étape de déformation afin de provoquer une déformation durable.

20. Procédé selon l'une des revendications 16 à 19, **caractérisé par le fait que** l'élément chauffant (2) est tenu à disposition à l'état de liaison indissociable avec une couche de placage aveugle (21) et/ou une pièce de support (3).

21. Procédé selon l'une des revendications 16 à 20, **caractérisé par le fait que** la pièce (1) de placage en applique est tenue à disposition en tant que laminat indissociable constitué d'une couche (10) de placage en applique, et d'une couche supérieure de placage aveugle (11).

22. Procédé selon l'une des revendications 16 à 21, **caractérisé par le fait que** l'élément de placage est fixé sur une pièce de support (3) après l'étape opératoire d'instauration d'une liaison indissociable.

23. Procédé selon l'une des revendications 16 à 22, **caractérisé par le fait que** les agents adhésifs (K) se présentent comme du papier collant ou comme une couche de colle déposée.
